(19)

Europäisches Patentamt

European Patent Office

Office européen des brevets

(11) **EP 4 772 305 A1**

(12) **EUROPEAN PATENT APPLICATION**
published in accordance with Art. 153(4) EPC

(43) Date of publication:
**08.07.2026 Bulletin 2026/28**

(21) Application number: **24859983.9**

(22) Date of filing: **30.08.2024**

(51) International Patent Classification (IPC):
***B23K 35/30*** (2006.01)   ***B23K 9/173*** (2006.01)

(52) Cooperative Patent Classification (CPC):
**B23K 9/173; B23K 35/30**

(86) International application number:
**PCT/JP2024/031293**

(87) International publication number:
**WO 2025/047958 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 JP 2023141138**

(71) Applicant: **Nippon Steel Corporation**
**Tokyo 1008071 (JP)**

(72) Inventors:
• **KODAMA Shinji**
**Tokyo 100-8071 (JP)**

• **MATSUBA Masahiro**
**Tokyo 100-8071 (JP)**
• **ISHIDA Yoshinari**
**Tokyo 100-8071 (JP)**
• **IWAKAMI Tomokatsu**
**Tokyo 135-0016 (JP)**
• **ASANO Hiroya**
**Tokyo 135-0016 (JP)**

(74) Representative: **Vossius & Partner**
**Patentanwälte Rechtsanwälte mbB**
**Siebertstraße 3**
**81675 München (DE)**

(54) **SOLID WIRE FOR GAS SHIELDED ARC WELDING, AND METHOD FOR MANUFACTURING WELDED JOINT**

(57)    A solid wire for gas-shielded arc welding according to an embodiment of the present disclosure includes: in terms of mass% with respect to a total mass of the solid wire, C: 0.04 to 0.12%, Si: 0.13 to 0.28%, Mn: 1.4 to 2.3%, Ti: 0.13 to 0.25%, Al: 0.001 to 0.050%, and the like, wherein $Si \times Mn \leq 0.60$, $(Si + Mn/5)/(Ti + Al) \leq 4.0$, $1.00 \leq Si + 0.5 \times (Mn + Cr) + 0.3 \times Ni$, $0.30 \leq C + Mn/6 + Si/24 + Ni/40 + Cr/5 + Mo/4 + V/14 \leq 0.55$, and $0 \leq Cr + Ni \leq 3.00$ are satisfied.

FIG. 1

EP 4 772 305 A1

**Description**

TECHNICAL FIELD

The present disclosure relates to a solid wire for gas-shielded arc welding and a manufacturing method of a welded joint.

Priority is claimed on Japanese Patent Application No. 2023-141138, filed August 31, 2023, the content of which is incorporated herein by reference.

BACKGROUND ART

Gas-shielded arc welding is widely used in various fields. For example, in the field of automobiles, gas-shielded arc welding is used for welding suspension members or the like. Examples of the welding materials in gas-shielded arc welding include a solid wire. The solid wire has no flux in the central portion of the wire cross section or the like, and the cross section thereof is solid. Various solid wires for gas-shielded arc welding have been proposed in the prior art.

Patent Document 1 discloses a wire for gas-shielded arc welding containing: with respect to the total mass of the wire, C: 0.01 mass% or more and 0.10 mass% or less, Si: 0.05 mass% or more and 0.55 mass% or less, Mn: 1.60 mass% or more and 2.40 mass% or less, Ti: 0.05 mass% or more and 0.25 mass% or less, Cu: 0.30 mass% or less, Al: 0.10 mass% or less, P: 0.025 mass% or less, S: 0.010 mass% or less, and a balance being Fe and unavoidable impurities, wherein when [Si] is defined as the Si content (mass%) with respect to the total mass of the wire and [Ti] is defined as the Ti content (mass%) with respect to the total mass of the wire, $0.1 \leq [Ti]/[Si] \leq 3.0$ is satisfied.

Patent Document 2 discloses an ultra-low silicon welding wire that contains: in terms of wt%, C: 0.001 to 0.30%, Si: 0.15% or less, Mn: 0.50 to 3.00%, P: 0.030% or less, S: 0.030% or less, and a balance being Fe and unavoidable impurities and is excellent in pore resistance and electrodeposition coating properties.

Citation List

Patent Documents

   Patent Document 1: Japanese Unexamined Patent Application, First Publication No. 2021-45761
   Patent Document 2: Japanese Unexamined Patent Application, First Publication No. 2019-81195

SUMMARY OF INVENTION

Technical Problem

When a steel member is subjected to gas-shielded arc welding using a solid wire, oxygen contained in the oxidizing gas in the shielding gas reacts with elements such as Si and Mn contained in the steel material and the wire, and Si and Mn-based slag mainly containing Si oxide and Mn oxide is generated. As a result, a large amount of Si and Mn-based slag remains on the surface of the weld bead, which is a melted and solidified portion.

The slag adhering to the bead of the welded joint may impair the electrodeposition coating properties of the welded joint. The electrodeposition coating properties deteriorate in the portion where the slag remains because the Si oxide and the Mn oxide as an insulator are not energized during electrodeposition coating, and the weld is not entirely coated.

Patent Documents 1 and 2 propose reducing the Si content as a means for improving the electrodeposition coating properties. The documents both disclose that Si and oxygen are combined with each other during welding to form a slag, which impairs the electrodeposition coating properties of the welded joint.

However, the present inventors have found that a solid wire with reduced Si impairs welding workability. Specifically, the solid wire with reduced Si increases spatter and impairs sheet separation weldability in lap welding.

Spatter is molten metal particles scattered during arc welding. Spatter impairs welding workability. In addition, part of the spatter scattered in the welding work environment adheres to the surface of the welded joint to impair the aesthetic appearance of the welded joint. The spatter adhering to the surface of the welded joint may be a starting point of fatigue cracks or a starting point of red rust associated with electrodeposition coating failure. The step of removing spatter adhering to a welded joint increases the manufacturing cost of the welded joint.

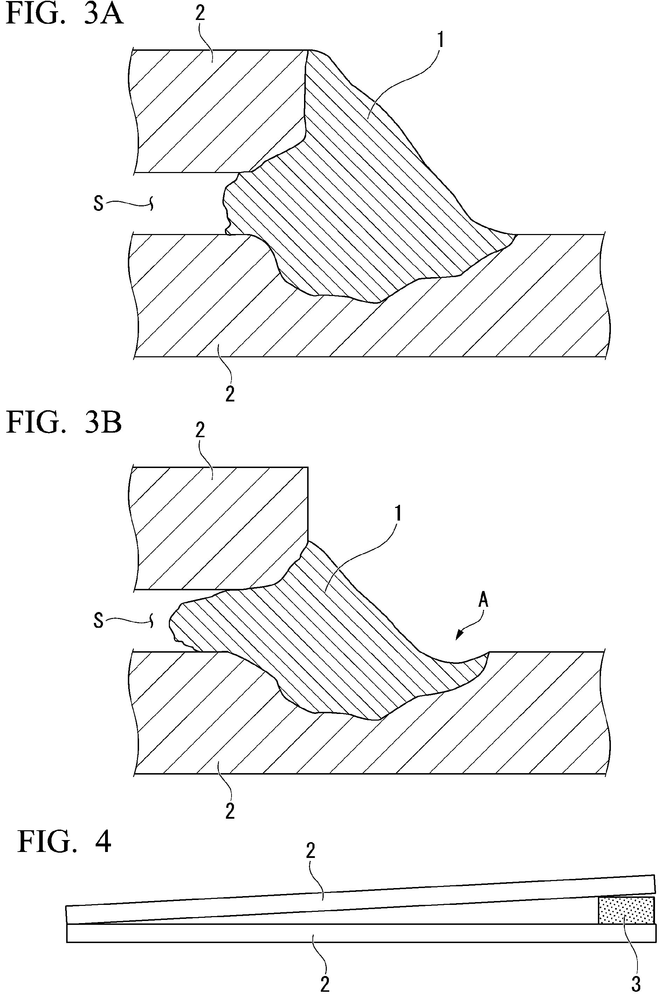

The sheet separation weldability is an ability to form a normal joint portion when a plurality of stacked steel sheets is welded. When welding is actually performed, there is often a separation between the steel sheets in the weld due to variations in press quality, assembly accuracy, or the like. In the lap fillet joint, which is frequently used in arc welding of thin steel sheets, when the separation between the steel sheets is increased, the shape of the weld connecting the upper sheet and the lower sheet is easily disturbed. A joint whose weld has a shape as illustrated in FIG. 3B may have an insufficient joint strength. When a pair of sheets having a sheet separation S between the upper sheet and the lower sheet is welded, a solid wire that cannot form a weld metal 1 over the upper end of the upper sheet end surface is evaluated to have low sheet separation weldability. When welding is performed using a solid wire having low sheet separation weldability, the weld metal 1 may enter the separation S of the steel sheets 2, or an undercut A may occur in the lower sheet (the steel sheet 2 whose surface is welded, on the lower side of the page), as illustrated in FIG. 3B.

On the other hand, as illustrated in FIG. 3A, when a pair of sheets having a sheet separation S between the upper sheet and the lower sheet is welded, a solid wire that can obtain a weld (welded joint) in which the upper sheet end surface is entirely melted, and the weld metal 1 is formed over the corner of the upper sheet is evaluated to have high sheet separation weldability.

In lap fillet arc welding using a solid wire with reduced Si in order to improve electrodeposition coating properties, a weld having a shape as illustrated in FIG. 3B is easily formed. There are similar problems in welding other than lap fillet welding.

When the solid wire contains alloy elements in an increased amount, the hardness of the alloy constituting the solid wire increases. This impairs the manufacturability of the solid wire. The solid wire is obtained by wire-drawing a wire rod. As the wire rod contains alloy elements in an increased amount to increase the amount of alloy elements in the solid wire, the wire rod becomes more difficult to perform wire-drawing.

A solid wire capable of solving all the above problems is earnestly desired in the industry, but according to the prior art, this demand cannot be sufficiently met. Patent Document 1 aims to improve the spatter resistance of a solid wire and the electrodeposition coating properties of a welded joint obtained using a solid wire. However, Patent Document 1 does not consider at all the sheet separation weldability and the manufacturability of a solid wire. Patent Document 2 aims to improve the electrodeposition coating properties of a welded joint obtained using a solid wire. However, Patent Document 2 does not consider at all the spatter resistance, the sheet separation weldability, and the manufacturability of a solid wire.

An object of the present disclosure is to provide a solid wire for gas-shielded arc welding and a manufacturing method of a welded joint capable of avoiding a welding defect in a pair of sheets having a large separation, further, excellent in drawability when the wire is manufactured, and capable of manufacturing a welded joint having high electrodeposition coating properties.

Solution to Problem

The gist of the present disclosure is as follows.

(1) The solid wire for gas-shielded arc welding according to an embodiment of the present disclosure includes: in terms of mass% with respect to a total mass of the solid wire, C: 0.04 to 0.12%, Si: 0.13 to 0.28%, Mn: 1.4 to 2.3%, Ti: 0.13 to 0.25%, Al: 0.001 to 0.050%, Cr: 0 to 3.00%, Ni: 0 to 3.00%, P: 0.020% or less, S: 0.015% or less, N: 0.0060% or less, Mo: 0 to 0.5%, B: 0 to 0.0100%, Cu: 0 to 0.50%, Nb: 0 to 0.30%, V: 0 to 0.5%, Zr: 0 to 0.20%, Mg: 0 to 0.050%, As: 0 to 0.020%, Sn: 0 to 0.100%, Sb: 0 to 0.10%, and a balance including iron and impurities, wherein formulae (i), (ii), (iii), (iv), and (v) below are satisfied:

$$Si \times Mn \leq 0.60... \text{ formula (i)}$$

$$(Si + Mn/5)/(Ti + Al) \leq 4.0... \text{ formula (ii)}$$

$$1.00 \leq Si + 0.5 \times (Mn + Cr) + 0.3 \times Ni... \text{ formula (iii)}$$

$$0.30 \leq C + Mn/6 + Si/24 + Ni/40 + Cr/5 + Mo/4 + V/14 \leq 0.55... \text{ formula (iv)}$$

$$0 \leq Cr + Ni \leq 3.00... \text{ formula (v)}$$

here, in the formulae (i), (ii), (iii), (iv), and (v), each element symbol is a content of each element, in terms of mass% with respect to the total mass of the solid wire.

(2) Preferably, in the solid wire for gas-shielded arc welding according to (1),

$$0.16 \leq C \times (5 \times Si + Mn) \leq 0.35... \text{ formula (vi)}$$

is satisfied, in terms of mass% with respect to the total mass of the solid wire.

(3) Preferably, the solid wire for gas-shielded arc welding according to (1) or (2) includes: in terms of mass% with respect to the total mass of the solid wire, one or more selected from Al: 0.010 to 0.050%, Cr: 0.10 to 1.50%, Ni: 0.10 to 3.00%, and B: 0.0030 to 0.0100%.

(4) Preferably, the solid wire for gas-shielded arc welding according to any one of (1) to (3) has a hardness satisfying formulae (vii) and (viii) below, the hardness being measured in a cross section of the solid wire:

$$H2 \geq 250... \text{ formula (vii)}$$

$$H2 - H1 \geq 40... \text{ formula (viii)}$$

here, in the formula (viii), the symbol H1 is a Vickers hardness measured at a depth of 0.05 mm from a surface of the solid wire; and in the formulae (vii) and (viii), the symbol H2 is an average value of Vickers hardness measured at a depth of 0.25 mm and a depth of 0.35 mm from the surface.

(5) Preferably, the solid wire for gas-shielded arc welding according to any one of (1) to (4) includes Si: 0.13 to 0.19%, in terms of mass% with respect to the total mass of the solid wire.

(6) Preferably, the solid wire for gas-shielded arc welding according to any one of (1) to (5) includes Cr: 0.15 to 3.00%, in terms of mass% with respect to the total mass of the solid wire.

(7) Preferably, the solid wire for gas-shielded arc welding according to any one of (1) to (5) includes Cr: 0% or more and less than 0.50%, in terms of mass% with respect to the total mass of the solid wire.

(8) Preferably, the solid wire for gas-shielded arc welding according to any one of (1) to (7) includes Ni: 0 to 0.45%, in terms of mass% with respect to the total mass of the solid wire.

(9) Preferably, in the solid wire for gas-shielded arc welding according to any one of (1) to (8),

$$0.05 \leq Cr + Ni \leq 3.00... \text{ formula (ix)}$$

is satisfied, in terms of mass% with respect to the total mass of the solid wire.

(10) Preferably, the solid wire for gas-shielded arc welding according to any one of (1) to (9) has a diameter of 0.8 to 1.4 mm.

(11) The manufacturing method of a welded joint according to another embodiment of the present disclosure includes: gas-shielded arc welding a steel sheet, using the solid wire for gas-shielded arc welding according to any one of (1) to (10).

Advantageous Effects of Invention

According to the present disclosure, it is possible to provide a solid wire for gas-shielded arc welding and a manufacturing method of a welded joint capable of avoiding a welding defect in a pair of sheets having a large separation, further, exceptional in drawability when the wire is manufactured, and capable of manufacturing a welded joint having high electrodeposition coating properties.

BRIEF DESCRIPTION OF DRAWINGS

[FIG. 1] A graph showing an experimental result of investigating a relationship between $Si + 0.5 \times (Mn + Cr) + 0.3 \times Ni$ and sheet separation weldability.

[FIG. 2] A graph showing an experimental result of investigating a relationship between $C \times (5 \times Si + Mn)$ and spatter amount.

[FIG. 3A] An example of a cross-sectional view of a weld obtained from a solid wire having a high sheet separation weldability.

[FIG. 3B] An example of a cross-sectional view of a weld obtained from a solid wire having a low sheet separation weldability.

[FIG. 4] A schematic view showing a separation between steel sheets for evaluating sheet separation weldability.

[FIG. 5A] A schematic view showing a droplet migration state from the tip of a solid wire having low droplet migration characteristics.

[FIG. 5B] A schematic view showing a droplet migration state from the tip of a solid wire having high droplet migration characteristics.

[FIG. 6] A graph showing an example of the cross-sectional hardness of various welding wires.

DESCRIPTION OF EMBODIMENTS

First, the technique idea of the solid wire according to the embodiment will be described. Note that a numerical range represented using "to" in the following descriptions means a range including numerical values described before and after "to" as the lower limit and the upper limit, unless otherwise specified. However, a numerical range in which "more than" or "less than" is attached to the numerical values described before and after "to" means a range not including these numerical values as the lower limit or the upper limit.

(1. Electrodeposition coating properties)

The present inventors have intensively studied measures for solving electrodeposition coating properties and obtained the following findings.

(A) The Si amount in the solid wire is reduced as much as possible so that the generation of Si-based slag is suppressed, and therefore electrodeposition coating properties can be improved. In a composition including less Si, the degree of deterioration of electrodeposition coating properties due to Mn slag is small.
(B) The Ti content of the solid wire is controlled within an appropriate range so that conductive Ti-based slag is generated on the surface of the weld bead, and therefore electrodeposition coating properties can be improved.
(C) The Ti content and the Al content of the solid wire are controlled within appropriate ranges so that the generation of insulating Si and Mn-based slag is suppressed, and therefore electrodeposition coating properties can be improved.

Based on the above findings, the present inventors have found the following formulae (1) and (2).

$$Si \times Mn \leq 0.60... \text{ formula (1)}$$

$$(Si + Mn/5)/(Ti + Al) \leq 4.0... \text{ formula (2)}$$

When the alloy component of the solid wire is controlled to satisfy the formulae (1) and (2), the electrodeposition coating properties of the welded joint have been improved.

On the other hand, the solid wire satisfying the above requirements has deteriorated sheet separation weldability and an increased spatter amount. Therefore, the present inventors have further studied measures for improving electrodeposition coating properties and securing sheet separation weldability and spatter resistance.

(2. Sheet separation weldability)

The present inventors prepared various lap fillet welded joints provided with a sheet separation S and observed the weld thereof. **In** the lap fillet welded joint having good sheet separation weldability as illustrated in FIG. 3A, the end surface of the steel sheet 2 on the upper side of the page is melted and solidified, the weld metal 1 being formed over the upper end of the end surface of the upper steel sheet 2 and firmly bonded to the weld metal 1. On the other hand, in the lap fillet welded joint having poor sheet separation weldability as illustrated in FIG. 3B, the end surface of the steel sheet 2 on the upper side of the page is insufficiently melted and solidified, and it is considered that the strength for connecting the upper steel sheet and the lower steel sheet may be reduced.

The present inventors considered that the sheet separation weldability is affected by the heat input balance for melting the welding wire, as well as by the high temperature physical property values of the weld metal such as viscosity and surface tension, each of which is caused by the components of the molten metal. The present inventors have focused on the heat input balance and examined the influence of the electric resistance value of the solid wire on the heat input balance.

During gas-shielded arc welding, the solid wire is melted, and the molten metal migrates from the tip of the solid wire to the steel sheet side. The heat amount for melting the solid wire is caused by resistance heat generated by a current flowing through the solid wire and arc plasma generated between the solid wire and the steel sheet. When the Si content of the solid wire is decreased, the electric resistance value of the solid wire is decreased, and the resistance heat amount is decreased. Then, the solid wire is insufficiently melted. When the welding current value is increased to ensure the heat amount for melting the solid wire, the heat amount generated in the steel sheet and the molten metal is increased, and the molten metal is excessively heated. The present inventors considered that this accelerates the burn-through of the weld.

Based on the above findings, the present inventors have found the following formula (3).

$$1.00 \leq Si + 0.5 \times (Mn + Cr) + 0.3 \times Ni... \text{ formula (3)}$$

The "Si + 0.5 × (Mn + Cr) + 0.3 × Ni" included in the formula (3) is an index of the electric resistance value of the solid wire. Mn, Cr, and Ni have a function of increasing the electrical resistance value of the steel, similarly to Si. It is intended to control the alloy component of the solid wire to satisfy the formula (3), so that the resistance heat generation and melting of the solid wire is promoted during gas-shielded arc welding, and the overheating of molten metal is suppressed.

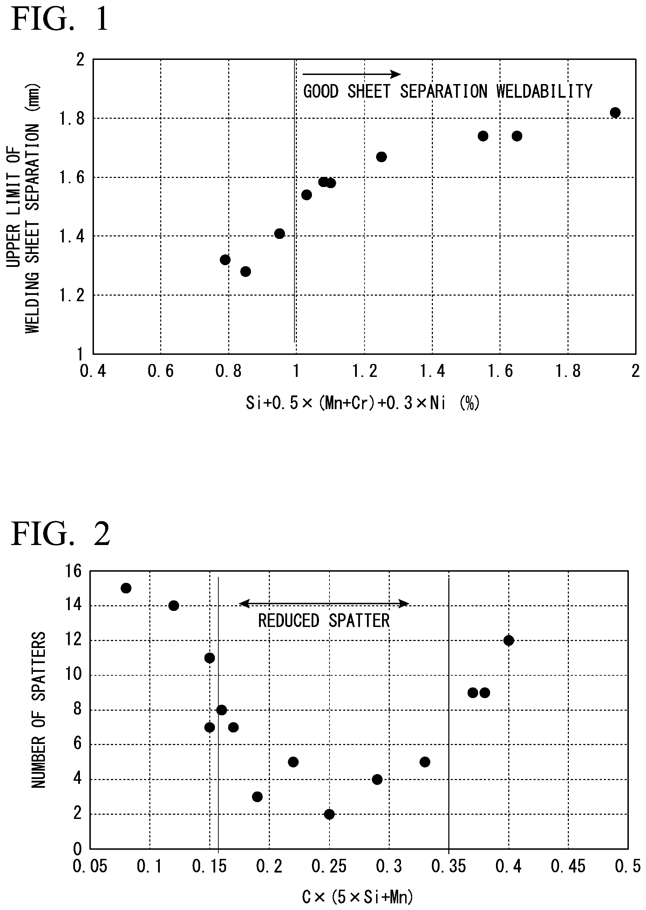

FIG. 1 shows the experimental results of the present inventors regarding the operation and effects of the formula (3). The present inventors performed gas-shielded arc welding under the same conditions using a plurality of solid wires different in Si + 0.5 × (Mn + Cr) + 0.3 × Ni. Then, the sheet separation (separation between steel sheets) that these solid wires can weld was investigated. Specifically, a pair of sheets whose separation between the steel sheets 2 gradually expands as illustrated in FIG. 4 was subjected to lap fillet welding to determine the limit value of the sheet separation to obtain a good weld as illustrated in FIG. 3A. Here, the "good weld" means a weld in which the weld metal 1 is formed over the upper end of the upper sheet end surface.

FIG. 1 is a graph in which the horizontal axis represents Si + 0.5 × (Mn + Cr) + 0.3 × Ni of the solid wire and the vertical axis represents the upper limit of welding the sheet separation (that is, the upper limit of the sheet separation to obtain a good welded joint). As shown in FIG. **1,** it has been found that the solid wire can secure good sheet separation weldability when Si + 0.5 × (Mn + Cr) + 0.3 × Ni is 1.00% or more.

(3. Spatter resistance)

The spatter reduction when welding is performed can be improved by optimizing the welding conditions, for example, by increasing the welding voltage. However, when the welding voltage is increased, welding heat input increases, which may cause deterioration in sheet separation weldability and the burn-through (perforation) of the steel sheet. Therefore, it is preferable that spatter can be reduced by improving the welding wire.

The present inventors further studied the cause of spatter generation by observing the behavior of molten metal during gas-shielded arc welding with a highspeed camera and found that a solid wire with reduced Si for improving electrodeposition coating properties is unstable in droplet migration. The droplet is a particle of molten metal formed by melting the tip of the wire with heat such as an arc. The droplet migration is a phenomenon in which the droplet passes through the arc generation portion and migrates from the consumable electrode toward the molten pool.

**In** general, for welding vehicle components or the like, pulse MAG welding that periodically varies the welding current value is adopted as gas-shielded arc welding. **In** an ideal droplet migration phenomenon in pulse MAG welding, when the welding current value increases, a droplet is formed at the tip of the solid wire; and when the welding current value decreases, the droplet separates from the tip of the solid wire. That is, it is preferable that the droplet migration cycle and the increase/decrease cycle of the welding current value coincide with each other.

However, the present inventors found that the droplet becomes difficult to separate from the tip of the solid wire as the solid wire contains less Si. When the droplet becomes difficult to separate from the tip of the solid wire, the droplet migration cycle and the increase/decrease cycle of the welding current value become difficult to coincide with each other. Thus, the present inventors have found that spatter occurs when there is a deviation between the cycles.

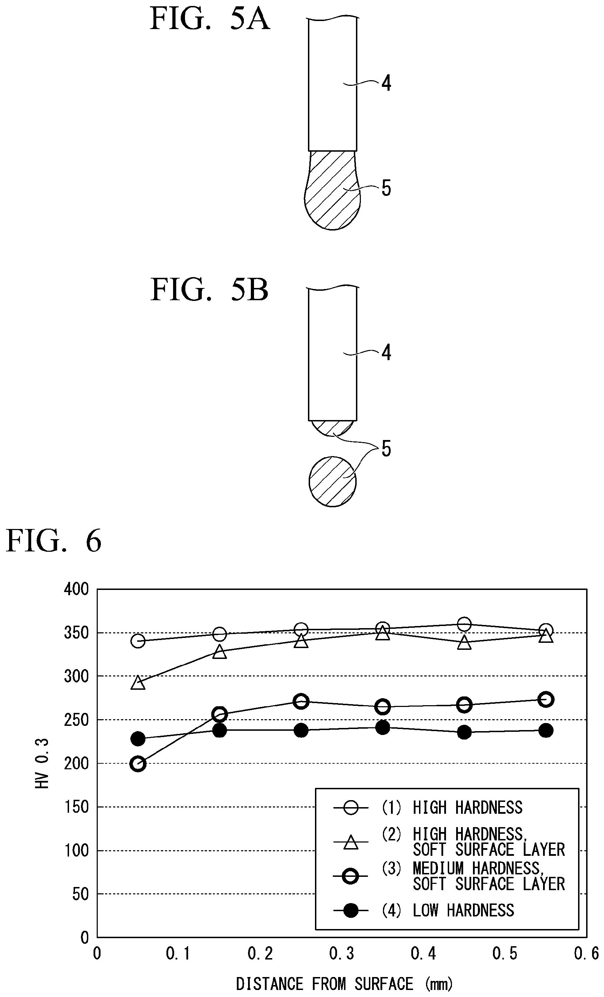

Next, the present inventors further studied a method for promoting separation of droplets. The present inventors considered that the surface tension and viscosity of the droplet affect the separation characteristics of the droplet. In the solid wire in which the Si content is reduced in order to improve electrodeposition coating properties, it has been confirmed that a droplet 5 is constricted and elongated at the tip of a solid wire 4, and the droplet is prevented from separation, as shown in FIG. 5A. It has been estimated that the phenomenon illustrated in FIG. 5A results from the fact that when the Si content of the droplet 5 is low, the oxygen content of the droplet 5 is increased due to insufficient deoxidation, and the surface tension of the droplet 5 is reduced.

When the Si content is increased and the surface tension of the droplet 5 is increased, the droplet 5 becomes a spherical particle and separates therefrom as illustrated in FIG. 5B, thereby improving droplet migration characteristics. However, according to the study of the present inventors, the solid wire 4 needs to contain about 0.3 mass% of Si in order to improve the separation characteristics of the droplet 5 only through the Si content. As a result, electrodeposition coating properties are impaired.

Therefore, the present inventors focused on viscosity, which is another factor for droplet separation characteristics. That is, the solid wire 4 contains Si and Mn in an appropriate amount to promote the deoxidation of the droplet 5, thereby increasing the surface tension of the droplet 5. Furthermore, the solid wire 4 contains C in an appropriate amount to reduce the viscosity of the droplet 5, thereby enhancing the fluidity of the droplet. The present inventors attempted to promote stable droplet separation as illustrated in FIG. 5B through a synergistic effect of these actions.

Based on the above findings, the present inventors have found the following formula (6).

$$0.16 \leq C \times (5 \times Si + Mn) \leq 0.35... \text{ formula (6)}$$

The "$C \times (5 \times Si + Mn)$" included in the formula (6) is an index of the viscosity of the droplet generated by melting the solid wire. C reduces the viscosity of the droplet. As the $(5 \times Si + Mn)$ increases, deoxidation of the droplet is promoted, and the surface tension of the droplet increases. The chemical components of the solid wire are controlled to satisfy the formula (6), and the solid wire appropriately contains C, Si, and Mn, so that droplet migration can be stabilized to reduce the spatter generation amount.

FIG. 2 shows the experimental results of the present inventors regarding the operation and effects of the formula (6). The present inventors performed gas-shielded arc welding under the same conditions using a plurality of solid wires different in $C \times (5 \times Si + Mn)$. Then, the number of spatters attached to the surface of the steel sheet was counted. FIG. 2 is a graph in which the horizontal axis represents $C \times (5 \times Si + Mn)$ of the solid wire and the vertical axis represents the number of spatters attached to the surface of the steel sheet. As shown in FIG. 2, when $C \times (5 \times Si + Mn)$ is within a range of 0.16 or more and 0.35 or less, the solid wire can significantly decrease the spatter amount.

(4. Manufacturability of solid wire)

The solid wire that has a reduced Si content for improving electrodeposition coating properties needs to contain alloy elements for increasing electric resistance and reducing the viscosity of the droplet. In order to reduce the electric resistance of the slag, the solid wire needs to contain Ti. However, these alloy elements increase the hardness of the solid wire and the wire rod, which is the material of the solid wire. As the hardness of the wire rod increases, breakage easily occurs when the wire rod is subjected to wire-drawing to obtain a solid wire.

Therefore, the present inventors have further controlled the chemical components of the solid wire by the following formula (4).

$$0.30 \leq C + Mn/6 + Si/24 + Ni/40 + Cr/5 + Mo/4 + V/14 \leq 0.55... \text{ formula (4)}$$

The "$C + Mn/6 + Si/24 + Ni/40 + Cr/5 + Mo/4 + V/14$" included in the formula (4) is the carbon equivalent Ceq. The higher the Ceq of the steel, the greater the hardness of the steel. Therefore, the solid wire according to the embodiment has a Ceq of 0.55 mass% or less. Accordingly, breakage hardly occurs when the solid wire is drawn, and the manufacturability of the solid wire is improved.

By satisfying the formulae (1), (2), (3), and (4) described above, it is possible to obtain a solid wire that is easily manufactured, capable of avoiding a welding defect in a pair of sheets having a large separation, and capable of manufacturing a welded joint having high electrodeposition coating properties. **In** addition, by satisfying the formula (6), it is possible to bring a spatter suppression effect on the solid wire.

Next, specific embodiments of the solid wire according to the embodiment will be described. The present inventors have determined the components of the solid wire for gas-shielded arc welding based on the above findings and various other circumstances. The solid wire for gas-shielded arc welding according to the embodiment achieves its operation and effects by each component alone or by a synergistic effect of a combination thereof. Hereinafter, the reason for limitation of each of the components will be described.

The content of each of the alloy elements described below is always in terms of mass% with respect to the total mass of the solid wire. When the solid wire has a plating layer such as copper plating, the mass of the alloy element contained in the entire solid wire including the plating layer is divided by the total mass of the solid wire including the plating layer to obtain a value, which is the mass% of the alloy element with respect to the total mass of the solid wire. Hereinafter, the mass% with respect to the total mass of the solid wire is simply referred to as "%". The unit "mass%" of the carbon equivalent Ceq is also simply referred to as "%" in the present disclosure.

[C: 0.04 to 0.12%]

C is an element that increases the strength of the weld metal. When the C content is 0.04% or more, the strength of the weld metal can be improved. In addition, C has an effect of reducing the viscosity of the droplet formed by melting the solid wire. As a result, the droplet migration is stabilized, and the spatter amount is suppressed. When the C content is 0.04% or more, the above-described effects can be obtained. Furthermore, the C content is preferably 0.06% or more.

On the other hand, when the C content exceeds 0.12%, the wire material is hardened, and the wire drawing properties of the wire are deteriorated. Therefore, the C content is 0.12% or less. Furthermore, the C content is preferably 0.10% or less.

[Si: 0.13 to 0.28%]

**In** the solid wire, Si is an element having a deoxidizing effect and is combined with oxygen in a molten pool to form slag during gas-shielded arc welding. When the molten pool is solidified to form a weld metal, the slag is discharged out of the weld metal. Therefore, Si has an effect of reducing the oxygen amount in the weld metal. Si is actively added as a deoxidizing element to a normal solid wire.

However, a slag containing Si as a main component has a high electric resistance value. A slag having a high electric resistance value prevents a coating film from adhering to a weld metal or a steel sheet during electrodeposition coating. Therefore, a slag containing Si as a main component causes electrodeposition coating failure of a welded joint. From the viewpoint of improving the electrodeposition coating properties, it is preferable to reduce the Si content in the molten pool. Therefore, the Si content of the solid wire is 0.28% or less. The Si content is preferably 0.25% or less, 0.22% or less, 0.20% or less, 0.19% or less, or 0.18% or less.

On the other hand, when the Si content of the solid wire is excessively decreased, the electric resistance value of the solid wire is insufficient. As the electric resistance value of the solid wire is lowered, the solid wire is less likely to melt, and the sheet separation weldability is deteriorated. In addition, when the Si content of the solid wire is excessively reduced, the surface tension of the droplet formed by melting the solid wire is lowered, the droplet migration becomes unstable, and the spatter amount increases. In the solid wire according to the embodiment, elements other than Si are used to satisfy the formula (3) and preferably the formula (6), thereby relaxing adverse effects of Si reduction. However, when the Si content is less than 0.13%, the above-mentioned adverse effects are remarkably exhibited. Therefore, the Si content of the solid wire is 0.13% or more. If necessary, the Si content may be 0.15% or more, 0.18% or more, or 0.20% or more.

[Mn: 1.4 to 2.3%]

Like Si, Mn is also a deoxidizing element. Mn promotes deoxidation of the molten pool during arc welding. Furthermore, Mn also has an effect of improving the tensile strength of the weld metal. In addition, Mn has an effect of promoting resistance heat generation of the solid wire and improving sheet separation weldability. In addition, Mn also has an effect of stabilizing droplet migration by increasing the surface tension through the deoxidizing action of the droplet. Therefore, the Mn content of the solid wire is 1.4% or more. The Mn content is preferably 1.5% or more, 1.6% or more, 1.7% or more, or 1.8% or more.

On the other hand, when the Mn content is excessively large, an insulating Mn-based slag is significantly generated on the surface of the weld metal, and electrodeposition coating defects may occur. In addition, when the Mn content is excessively large, the wire rod, which is the material of the solid wire, is excessively hardened, and the manufacturability of the solid wire may be impaired. Therefore, the Mn content of the solid wire is 2.3% or less. The Mn content is preferably 2.2% or less, 2.1% or less, or 2.0% or less.

[Ti: 0.13 to 0.25%]

Ti generates a Ti-based slag mainly containing Ti oxide during gas-shielded arc welding. The Ti-based slag is conductive unlike the Si and Mn-based slag. The conductive Ti-based slag hardly causes electrodeposition coating defects. Therefore, Ti can improve the electrodeposition coating properties of the solid wire. Ti also has an effect of suppressing the generation of a blowhole. For the above reasons, the Ti content of the solid wire is 0.13% or more. The Ti content is preferably 0.15% or more, 0.18% or more, or 0.20% or more.

On the other hand, when the Ti content is excessively large, the Ti-based oxide is excessively generated, and the elongation of the weld metal may be reduced. Therefore, the Ti content is 0.25% or less. The Ti content is preferably 0.24% or less, 0.23% or less, or 0.21% or less.

[Al: 0.001 to 0.050%]

Al has a deoxidizing effect. Al enhances the tensile strength of the weld metal by promoting deoxidation of the molten pool. **In** addition, Al can reduce the generation amount of Si and Mn-based slag and improve the electrodeposition coating properties similarly to Ti. Therefore, the Al content of the solid wire is 0.001% or more. The Al content is preferably 0.010% or more, 0.015% or more, or 0.018% or more.

On the other hand, when the Al content is excessively large, an Al-based oxide is excessively generated, and the elongation of the weld metal decreases. In addition, an Al-based slag has insulating properties similarly to the Si-based slag and the Mn-based slag. When the Al-based slag is significantly generated on the surface of the weld metal, electrodeposition coating failure may occur. Therefore, the Al content of the solid wire is 0.050% or less. The Al content is preferably 0.030% or less, or 0.020% or less.

$$[0 \leq Cr + Ni \leq 3.00]$$

Cr and Ni are not essential for solving the problem of the solid wire according to the embodiment. In the solid wire according to the embodiment, the lower limit of the Cr content is 0%, and the lower limit of the Ni content is 0%. The lower limit of the total content of Cr and Ni is also 0%.

On the other hand, Cr and Ni are elements that increase the electric resistance of the solid wire and promote melting of the solid wire. Cr and Ni also have a function of improving the mechanical properties of the weld metal. Therefore, the solid wire preferably contains at least one of Cr and Ni. The solid wire preferably contains both Cr and Ni. When the total content of Cr and Ni is 0.05% or more, the above effect can be obtained. Therefore, the content of Cr and Ni is preferably 0.05% or more in total. The content of Cr and Ni is more preferably 0.10% or more, 0.15% or more, or 0.30% or more, in total.

On the other hand, when the content of Cr and Ni is excessively large, the elongation of the weld metal may decrease and the weld metal may crack. In addition, when the content of Cr and Ni is excessively large, the hardness of the wire rod, which is the material of the solid wire, is excessively high, and the manufacturability of the solid wire may be impaired. Therefore, the content of Cr and Ni is 3.00% or less in total. The total content of Cr and Ni is preferably 2.50% or less, 2.00% or less, or 1.00% or less.

Therefore, the solid wire satisfies the formula (5).

$$0 \leq Cr + Ni \leq 3.00... \text{ formula (5)}$$

Here, each of the element symbols in the formula (5) is the content of each element in terms of mass% with respect to the total mass of the solid wire. The values on the left and right sides of the formula (5) can be replaced with the preferred upper and lower limits of the total content of Cr and Ni described above. For example, the solid wire may satisfy the formula (9) instead of satisfying the formula (5).

$$0.05 \leq Cr + Ni \leq 3.00... \text{ formula (9)}$$

[Cr: 0 to 3.00%]

In addition to the total content of Cr and Ni within the above range, the Cr content is 0 to 3.00%. The Cr content may be defined as 0.05 to 1.50%. The Cr content is preferably 0.05% or more, 0.11% or more, 0.15% or more, or 0.20% or more. The Cr content is preferably 2.50% or less, 2.00% or less, 1.50% or less, 1.20% or less, 1.00% or less, 0.50% or less, less than 0.50%, 0.45% or less, or 0.40% or less.

[Ni: 0 to 3.00%]

Furthermore, in addition to the total content of Cr and Ni within the above range, the Ni content is 0 to 3.00%. The Ni content may be defined as 0.05 to 3.00%. The Ni content is preferably 0.05% or more, 0.08% or more, 0.10% or more, or 0.20% or more. The Ni content is preferably 2.50% or less, 2.00% or less, 1.50% or less, 1.20% or less, 1.00% or less, 0.50% or less, 0.45% or less, or 0.40% or less.

[P: 0.020% or less]

P is generally an element mixed in steel as an impurity and is usually contained in a solid wire for arc welding as an impurity. Here, since P is one of the main elements that cause hot cracking of the weld metal, it is desirable to suppress P as much as possible. When the P content exceeds 0.020%, the weld metal is significantly hot-cracked. Therefore, the P content of the solid wire is 0.020% or less. The P content is preferably 0.015% or less, 0.012% or less, or 0.010% or less.

P does not contribute to solving the problem of the present disclosure.

Therefore, the P content of the solid wire may be 0%. However, the P content of the solid wire may be more than 0% in consideration of the refining cost. The P content may be 0.001% or more, 0.002% or more, or 0.005% or more.

[S: 0.015% or less]

Like P, S is also generally an element mixed in steel as an impurity and is usually contained in a solid wire for arc welding as an impurity. Therefore, the S content of the solid wire is 0.015% or less. The S content is preferably 0.012% or less, 0.010% or less, or 0.008% or less. The S content may be 0%, but the S content may be more than 0%, or 0.001% or more, in consideration of the refining cost.

[N: 0.006% or less]

N is also generally an element mixed in steel as an impurity and is usually contained in a solid wire for arc welding as an impurity. The excessively large amount of N reduces the toughness of the weld metal or causes pore defects of the weld metal. Therefore, the N content of the solid wire is 0.006% or less. The N content is preferably 0.005% or less, or 0.004% or less. The N content may be 0%, but the N content may be more than 0%, or 0.001% or more, in consideration of the refining cost.

Mo, B, Cu, Nb, and V are not essential elements for solving the problem of the present disclosure. Therefore, the lower limit of the content of these elements is 0%. On the other hand, when one or more of these elements are contained in the solid wire, the performance of the solid wire can be further improved.

[Mo: 0 to 0.5%]

The Mo content of the solid wire may be 0%. However, Mo improves the hardenability of the weld to improve the tensile strength. Therefore, if necessary, the Mo content of the solid wire may be 0.1% or more, 0.2%, or 0.3% or more. On the other hand, in order to ensure ductility of the weld, the Mo content of the solid wire is 0.5% or less. If necessary, the Mo content may be 0.4% or less, or 0.3% or less.

[B: 0 to 0.0100%]

The B content of the solid wire may be 0%. However, B improves the hardenability of the weld to improve the tensile strength. Therefore, if necessary, the B content of the solid wire may be 0.0010% or more, 0.0020% or more, or 0.0030% or more. On the other hand, in order to ensure ductility of the weld, the B content of the solid wire is 0.0100% or less. If necessary, the B content may be 0.0090% or less, or 0.0070% or less.

[Cu: 0 to 0.50%]

The Cu content of the solid wire may be 0%. However, the copper plating provided on the solid wire for arc welding has an effect of stabilizing wire feeding properties and electric conductivity. Therefore, if necessary, the Cu content of the solid wire may be 0.10% or more, 0.15% or more, or 0.18% or more. On the other hand, the Cu content of the solid wire is 0.50% or less from the viewpoint of suppressing weld cracking. If necessary, the Cu content may be 0.40% or less, or 0.30% or less.

[Nb: 0 to 0.30%]

The Nb content of the solid wire may be 0%. However, Nb has an effect of improving the hardenability of the weld to improve the tensile strength. Therefore, if necessary, the Nb content of the solid wire may be 0.05%, 0.10% or more, or 0.12% or more. On the other hand, from the viewpoint of ensuring the ductility of the weld, the Nb content of the solid wire is 0.30% or less. If necessary, the Nb content may be 0.25% or less, 0.20% or less, or 0.12% or less.

[V: 0 to 0.5%]

The V content of the solid wire may be 0%. However, V has an effect of improving the hardenability of the weld to improve the tensile strength. Therefore, if necessary, the V content of the solid wire may be 0.05% or more, 0.1% or more, or 0.12% or more. On the other hand, from the viewpoint of ensuring the ductility of the weld, the V content is 0.5% or less. If necessary, the V content may be 0.30% or less, or 0.20% or less.

(Zr: 0 to 0.20%)

The Zr content of the solid wire may be 0%. However, Zr reduces the oxygen amount of the weld metal by a deoxidizing effect to improve the toughness of the weld metal. Therefore, if necessary, the Zr content of the solid wire may be 0.01% or more, 0.05% or more, or 0.08% or more. On the other hand, in order to suppress the generation of coarse inclusions (for example, inclusions having an equivalent circle diameter of 5 μm or more), the upper limit of the Zr content is 0.20%. If necessary, the Zr content may be 0.18% or less, 0.15% or less, 0.10% or less, or 0.05% or less.

(Mg: 0 to 0.050%)

The Mg content of the solid wire may be 0%. However, Mg reduces the oxygen amount of the weld metal by a deoxidizing effect to improve the toughness of the weld metal. Therefore, if necessary, the Mg content of the solid wire may be 0.001% or more, 0.003% or more, or 0.005% or more. On the other hand, when the Mg content is reduced, the amount of generated slag is reduced, and welding defects such as slag entrainment are suppressed. Therefore, the Mg content is 0.050% or less. If necessary, the Mg content may be 0.040% or less, 0.030% or less, 0.010% or less, or 0.008% or less.

(As: 0 to 0.020%)

As is an element mixed in steel as an impurity and may be contained in a solid wire for arc welding as an impurity. Here, As is one of the elements that segregate at grain boundaries during solidification of the weld metal to reduce the toughness of the weld metal. Therefore, it is desirable to suppress As as much as possible. Therefore, the As content of the solid wire is 0.020% or less. The As content may be 0.015% or less, 0.012% or less, or 0.010% or less. On the other hand, from the viewpoint of reducing the refining cost, the As content is allowed to be more than 0%, 0.001% or more, 0.005% or more, or 0.008% or more.

(Sn:0 to 0.100%)

The Sn content of the solid wire may be 0%. However, Sn is an element that improves the corrosion resistance of the weld metal. Therefore, if necessary, the Sn content of the solid wire may be 0.001% or more, 0.005% or more, or 0.010% or more. On the other hand, the Sn content of the wire is reduced to suppress cracking of the weld metal. Therefore, the Sn content is 0.100% or less. If necessary, the Sn content may be 0.080% or less, 0.050% or less, or 0.020% or less.

(Sb: 0 to 0.10%)

The Sb content of the solid wire may be 0%. However, Sb, as a surface-activating element, has an effect of promoting the flow of the molten metal and discharging impurity elements to the surface of the molten metal. Therefore, if necessary, the Sb content of the solid wire may be 0.001 % or more, 0.005% or more, or 0.01% or more. On the other hand, the Sb content of the wire is reduced to suppress cracking of the weld metal. Therefore, the Sb content is 0.10% or less. If necessary, the Sb content may be 0.08% or less, 0.05% or less, or 0.02% or less.

The balance of the components described above contains iron (Fe) and impurities. The impurities mean components contained in the raw material or components mixed in the manufacturing process, the components being contained in the solid wire as long as the solid wire is not adversely affected.

The chemical components of the solid wire according to the embodiment further satisfy the formulae (1), (2), (3), and (4) described below. Preferably, the chemical components of the solid wire according to the embodiment also satisfy the formula (6). Each of the element symbols in the formulae (1), (2), (3), (4), and (6) is the content of each element in terms of mass% with respect to the total mass of the solid wire.

(Si × Mn: 0.60 or less)

As described above, Si and Mn are elements that adversely affect the electrodeposition coating properties. However, in a composition including less Si, the degree of deterioration of coating properties due to Mn slag is small. Therefore, in the solid wire according to the embodiment, the content of Si and Mn is set to satisfy the following formula (1).

$$\text{Si} \times \text{Mn} \leq 0.60 \dots \text{ formula (1)}$$

When the value of Si × Mn exceeds 0.60, insulating Si-based slag and Si-Mn-based slag are significantly generated on the surface of the weld bead, and electrodeposition coating defects may occur. Therefore, Si × Mn is 0.60 or less. Si × Mn is preferably 0.55 or less, 0.50 or less, or 0.45 or less. The lower limit of Si × Mn is not particularly limited, but Si × Mn is, for example, 0.23 or more, 0.24 or more, or 0.25 or more.

$$((\text{Si} + \text{Mn}/5)/(\text{Ti} + \text{Al}): 4.0 \text{ or less})$$

As described above, Ti and Al are elements capable of suppressing an adverse effect on electrodeposition coating properties due to Si and Mn-based slag. Therefore, in the solid wire according to the embodiment, the content of Si, Mn, Ti, and Al is set to satisfy the following formula (2).

$$(Si + Mn/5)/(Ti + Al) \leq 4.0... \text{ formula (2)}$$

When the value of (Si + Mn/5)/(Ti + Al) is 4.0 or less, it is possible to reliably suppress an adverse effect on electrodeposition coating properties due to the Si and Mn-based slag, and to obtain excellent electrodeposition coating properties. The value of (Si + Mn/5)/(Ti + Al) is preferably 3.5 or less, 3.0 or less, or 2.5 or less. The lower limit of (Si + Mn/5)/(Ti + Al) is not particularly limited, but for example, (Si + Mn/5)/(Ti + Al) may be 1.3 or more, 1.5 or more, or 2.0 or more.

In the formula (1), the product of Si and Mn is used as an index, but in the formula (2), the sum of Si and Mn/5 is used as an index. This is because Ti and Al are used for the purpose of reducing the absolute amount of Si-Mn-based slag.

$$(Si + 0.5 \times (Mn + Cr) + 0.3 \times Ni: 1.00\% \text{ or more})$$

As described above, Si + 0.5 × (Mn + Cr) + 0.3 × Ni is an index of the resistance value of the solid wire. When the resistance value of the solid wire is too low, the resistance heat amount of the solid wire is decreased, and the solid wire becomes difficult to melt. As a result, the sheet separation weldability is impaired. In order to improve the sheet separation weldability, the chemical components of the solid wire are selected to satisfy the following formula (3).

$$1.00 \leq Si + 0.5 \times (Mn + Cr) + 0.3 \times Ni... \text{ formula (3)}$$

Si + 0.5 × (Mn + Cr) + 0.3 × Ni may be 1.10% or more, 1.20% or more, 1.30% or more, or 1.40% or more. The upper limit of Si + 0.5 × (Mn + Cr) + 0.3 × Ni is not particularly limited. From the viewpoint of ensuring the manufacturability of the solid wire, Si + 0.5 × (Mn + Cr) + 0.3 × Ni may be 2.00% or less, 1.90% or less, 1.80% or less, or 1.60% or less.

$$(C \times (5 \times Si + Mn): \text{ preferably } 0.16 \text{ to } 0.35)$$

As described above, C × (5 × Si + Mn) is an index of the viscosity of the droplet formed by melting the solid wire. As C × (5 × Si + Mn) increases, the surface tension of the droplet increases, the viscosity decreases, and the droplet migration is stabilized. This reduces spatter. Therefore, the chemical components of the solid wire according to the embodiment are preferably selected to satisfy the following formula (6).

$$0.16 \leq C \times (5 \times Si + Mn) \leq 0.35... \text{ formula (6)}$$

C × (5 × Si + Mn) may be 0.18 or more, 0.19 or more, or 0.20 or more. On the other hand, when C × (5 × Si + Mn) is excessively large, the stability of droplet migration rather decreases. Therefore, C × (5 × Si + Mn) is preferably 0.35 or less. More preferably, C × (5 × Si + Mn) is 0.30 or less, 0.25 or less, or 0.22 or less.

(Ceq: 0.30 to 0.55%)

As described above, C + Mn/6 + Si/24 + Ni/40 + Cr/5 + Mo/4 + V/14 is the carbon equivalent Ceq of the solid wire. When Ceq is reduced, the hardness of the wire rod, which is the raw material of the solid wire, is reduced, and the manufacturability of the solid wire is improved. Therefore, the chemical components of the solid wire according to the embodiment are selected to satisfy the following formula (4).

$$0.30 \leq C + Mn/6 + Si/24 + Ni/40 + Cr/5 + Mo/4 + V/14 \leq 0.55... \text{ formula (4)}$$

Ceq is preferably 0.55% or less, 0.50% or less, or 0.45% or less. On the other hand, from the viewpoint of improving the strength of the weld metal, Ceq is 0.30% or more. Ceq is preferably 0.32% or more, 0.35% or more, or 0.38% or more.

$$(H2 \geq 250)$$

$$(H2 - H1 \geq 40)$$

The present inventors have found that there is a correlation between the generation amount of spatter during welding and the mechanical characteristics of the solid wire. In order to reduce the generation amount of spatter, the wire feeding speed needs to be substantially constant. The wire feeding speed is the length of the wire fed per unit time. When the strength of the solid wire is increased, deformation of the solid wire is suppressed. When the deformation amount of the solid wire is reduced, friction of the solid wire in the wire cable is suppressed. When friction of the solid wire is suppressed, the fluctuation of the wire feeding speed is suppressed. That is, when the strength of the wire is increased, the wire feeding speed can be substantially constant so that the generation amount of spatter is further suppressed.

On the other hand, the present inventors have also found that an excessively hardened solid wire increases the generation amount of spatter. The excessively hardened solid wire promotes wear of the electrode tip. The wear of the electrode tip varies the position of the power supply point. The power supply point is a contact point for supplying power by passing a solid wire through the electrode tip. The power supply point is generally in the vicinity of the tip of the power supply tip. The variation of the position of the power supply point increases the generation amount of spatter.

As a result of the above examination, the present inventors have found that it is extremely effective for suppressing spatter to increase the hardness of the inside of the solid wire and soften the surface layer. Therefore, preferably, in the solid wire according to the embodiment, the hardness measured in the cross section of the solid wire satisfies the following formulae (7) and (8).

$$H2 \geq 250... \text{ formula (7)}$$

$$H2 - H1 \geq 40... \text{ formula (8)}$$

Here, the symbol H1 in the formula (8) is the Vickers hardness measured at a depth of 0.05 mm from the surface of the solid wire. The symbol H2 in the formulae (7) and (8) is an average value of Vickers hardness measured at a depth of 0.25 mm and a depth of 0.35 mm from the surface. The Vickers hardness is HV0.3 of JIS Z2244-1:2024. HV0.3 is a Vickers hardness measured by a Vickers test with a test force of 2.942 N (300 gf). When plating is provided on the surface of the solid wire, the surface of the solid wire is the interface between the plating and the base material (iron portion of base material, corresponding to steel wire without plating).

H2 represents the internal hardness of the solid wire. The solid wire satisfying the formula (7) has a sufficiently high internal hardness. Therefore, in the welding using the solid wire satisfying the formula (7), the wire feeding speed is stabilized, and the spatter generation amount is further suppressed.

H1 represents the hardness of the surface layer of the solid wire. H2-H1 represents the softening degree of the surface layer of the solid wire. The larger H2-H1 is, the softer the surface layer of the solid wire is. Therefore, in the welding using the solid wire satisfying the formula (8), wear of the electrode tip is suppressed, and the spatter generation amount is further suppressed.

As described above, the solid wire satisfying the formulae (7) and (8) is very preferable because the spatter generation amount is further suppressed. However, even the solid wire that does not satisfy the formulae (7) and (8) practically suppresses the spatter generation amount. Therefore, there is no need to exclude the solid wire that does not satisfy the formulae (7) and (8) from the solid wire according to the embodiment.

The solid wire satisfying the formulae (7) and (8) is obtained, for example, by a manufacturing method including:

(S1) primarily-drawing a wire rod having the same components as that of the solid wire according to the embodiment to obtain a primary drawn wire;
(S2) annealing the primary drawn wire; and
(S3) secondarily-drawing the primary drawn wire to obtain a solid wire.

The annealing is performed under the following conditions.

· Annealing temperature: 650 to 900°C
· Annealing time: 10 to 30 min
· Product of annealing temperature (°C) and annealing time (min): 8400 to 25000 °C·min
· Dew point of annealing atmosphere: -10 to +10°C

The secondary wire-drawing is performed under the following conditions.

· Area proportion of the secondary drawn wire with respect to the primary drawn wire: 10 to 30%

That is, the cross-sectional area A1 of the primary drawn wire and the area proportion A2 of the secondary drawn wire satisfy the following formula.

$$0.10 \leq A2/A1 \leq 0.30$$

In order to confirm the operation and effects of controlling the hardness of the solid wire, the following experiments were performed. The wire material was primarily drawn by cold working, annealed in an intermediate step, and then secondarily drawn to prepare a solid wire. In annealing, the temperature was 750 to 900°C, and the annealing time was 20 to 30 minutes. Further, in annealing, the dew point was controlled in the range of -10 to +10°C by adding water vapor or hydrogen gas to the nitrogen atmosphere. In the production of Example A4, the pressure of the atmosphere was reduced to about 1000 Pa. FIG. 6 shows an example of the cross-sectional hardness of various welding wires. The horizontal axis in FIG. 6 represents the distance of the Vickers hardness measurement position from the surface of the solid wire. The vertical axis in FIG. 6 represents the hardness (HV0.3 in JIS Z2244-1: 2024) of the solid wire at the measurement position.

Examples A1 to A4 shown in the following table are obtained by primary wire-drawing wire materials having a diameter of 5.5 mm and having the components of Example No. 1 shown in Table 2A up to a diameter of 2.5 mm, then annealing the wire under various conditions, and then processing the wire into a solid wire having a diameter of 1.2 mm. **In the production of Examples A1 to A4, the area proportion of the secondary drawn wire with respect to the primary drawn wire was 23%.**

[Table 1]

| No. | Annealing temperature (°C) | Annealing time (min) | Product of annealing temperature and annealing time (°C·min) | Dew point (°C) | Area proportion | H2 (HV0.3) | H2-H1 (HV0.3) | Number of spatter adhesion |
|---|---|---|---|---|---|---|---|---|
| A1 | 600 | 10 | 6000 | -10 | 23% | 354 | 13 | 4 |
| A2 | 650 | 15 | 9750 | 5 | 23% | 346 | 52 | 1 |
| A3 | 830 | 30 | 24900 | -7 | 23% | 268 | 60 | 0 |
| A4 | 900 | 30 | 27000 | -10 | 23% | 240 | 11 | 8 |
| The "Area proportion" is the area proportion of the secondary drawn wire with respect to the primary drawn wire. | | | | | | | | |

Example No. A1 is obtained by annealing the primary drawn wire at an atmosphere dew point of -10°C, an annealing temperature of 600°C, and an annealing time of 10 minutes, and then subjecting the wire to secondary wire-drawing. Example No. A1 had no soft surface layer and showed a high hardness distribution.

Example No. A2 is obtained by annealing the primary drawn wire at an atmosphere dew point of +5°C, an annealing temperature of 650°C, and an annealing time of 15 minutes, and then subjecting the wire to secondary wire-drawing. Example No. A2 has high hardness, and the surface layer is softened.

Example No. A3 is obtained by annealing the primary drawn wire at an atmosphere dew point of -7°C, an annealing temperature of 830°C, and an annealing time of 30 minutes, and then subjecting the wire to secondary wire-drawing. Example No. A3 had a softer surface layer, and the hardness inside the wire slightly decreased, as compared with Example No. A2.

Example No. A4 is obtained by annealing the primary drawn wire at an atmosphere dew point of -10°C, an annealing temperature of 900°C, and an annealing time of 30 minutes, and then subjecting the wire to secondary wire-drawing. Example No. A4 had no soft surface layer and showed a low hardness distribution.

The spatter adhesion status during welding was investigated using these solid wires A1 to A4. As shown in Table 1, in the welding test using the solid wires A1 and A4, each of which had no softened surface layer, the number of spatter adhesion was slightly large. On the other hand, in the welding test using the solid wires A2 and A3, each of which had a softened surface layer, the number of spatter adhesion was extremely small. Based on these evaluation results, H2 ≥ 250 and H2 - H1 ≥ 40 are the basis of the hardness of the welding wire for minimizing spatter adhesion.

The chemical components of the solid wire can be measured by usual means. For example, the content of each element in terms of mass% with respect to the total mass of the solid wire can be determined in accordance with JIS G 0321:2017 "Product analysis and its tolerance for wrought steel".

The present inventors determined the chemical components of the solid wire by performing wet chemical analysis on a solid wire cut into a length of about several mm. Therefore, in the present disclosure, the content of the alloy element means an average value of the content of the alloy element in the solid wire.

The size (diameter) of the solid wire is not particularly limited but is preferably within a range of 0.8 to 1.6 mm, for example. This makes it possible to further improve the manufacturability of the solid wire and the workability in arc welding. The size of the solid wire may be 0.9 mm or more, 1.0 mm or more, or 1.1 mm or more. The size of the solid wire may be 1.5 mm or less, 1.4 mm or less, or 1.3 mm or less.

Solid wires exist not only for gas-shielded arc welding but also for submerged arc welding (SAW). However, the SAW wire has a large size, and a producer, a user, or the like, of welding wires can distinguish the SAW wire from the solid wire for gas-shielded arc welding by the wire size. Specifically, since the SAW wire does not have a size of 1.4 mm or less, a producer, a user, or the like, of welding wires can recognize a wire having a diameter of 1.4 mm or less as the solid wire for gas-shielded arc welding. **In** addition, even when the wire size is a diameter exceeding 1.4 mm, a producer, a user, or the like, of welding wires can easily determine whether the wire is the SAW wire or the solid wire for gas-shielded arc welding based on the standard name of the welding material or a catalog of a welding material manufacturer, in addition to the display content (standard name or standard number of the welding wire) on the packaging of the welding wire.

The solid wire according to the embodiment is preferably applied to gas-shielded arc welding of a steel sheet. For example, the manufacturing method of a welded joint including gas-shielded arc welding a steel sheet, using the solid wire for gas-shielded arc welding according to the embodiment, is capable of suppressing spatter, capable of avoiding a welding defect in a pair of sheets having a large separation, and capable of manufacturing a welded joint having high electrodeposition coating properties. The manufacturing method of a welded joint according to the embodiment is mainly for a chassis component as an automobile component. The steel sheet used as the welding base material is preferably a 440 to 1180 MPa-class steel sheet. The thickness of the steel sheet used as the welding base material is preferably 1.0 to 3.5 mm.

Examples

The effect of an embodiment of the present disclosure will be described more specifically with reference to Examples. However, the conditions in Examples are merely one condition example adopted to confirm the enablement and effects of the present disclosure. The present disclosure is not limited to this one condition example. The present disclosure can adopt various conditions as long as the object of the present disclosure is achieved without departing from the gist of the present disclosure.

(Experiment 1)

Solid wires with various chemical components were experimentally produced. The chemical components and calculated values of these solid wires are shown in Tables 2A, 2B, 3A, 3B, 4A, and 4B. The unit of the content of the alloy elements described in Tables 2A to 3B is mass%. The unit of Ceq and "Si + 0.5 × (Mn + Cr) + 0.3 × Ni" described in Tables 4A and 4B is mass%. The balance of the chemical components shown in Tables 2A to 3B was iron and impurities. Numerical values outside the scope of the present disclosure are underlined. Components not contained were left blank in the tables. Cu of the solid wire is derived from Cu plating formed on the surface of the solid wire. Example 6 was a solid wire without Cu plating, and therefore, no Cu was contained therein.

The solid wire was manufactured as follows. A vacuum-melted raw material steel was forged and rolled to obtain a wire material having a diameter of 5.0 mm. Thereafter, the wire material was annealed and then subjected to finish drawing to a diameter of 1.2 mm as its product size. Examples 6 and 17 were not provided with copper plating. The other wires were provided with copper plating on their surfaces. The solid wire after finish drawing was made a 20 kg wound spool, which was used as a sample. The annealing conditions (annealing temperature, annealing time, and annealing atmosphere) for the primary drawing and the area proportion during the secondary drawing were all the same conditions as those in Example No. A3 in Table 1.

[Table 2A]

| No. | C | Si | Mn | Ti | Al | Cr | Ni | Cr + Ni |
|-----|------|------|-----|------|-------|------|------|---------|
| 1 | 0.07 | 0.16 | 2.0 | 0.18 | 0.001 | 0.12 | | 0.12 |
| 2 | 0.06 | 0.19 | 1.8 | 0.16 | 0.001 | 0.06 | | 0.06 |
| 3 | 0.07 | 0.28 | 1.5 | 0.14 | 0.020 | | 0.07 | 0.07 |
| 4 | 0.08 | 0.16 | 1.8 | 0.15 | 0.020 | 0.31 | | 0.31 |
| 5 | 0.07 | 0.19 | 2.1 | 0.22 | 0.020 | 0.30 | | 0.30 |
| 6 | 0.07 | 0.20 | 1.6 | 0.15 | 0.002 | 0.05 | | 0.05 |

(continued)

| No. | C | Si | Mn | Ti | Al | Cr | Ni | Cr + Ni |
|---|---|---|---|---|---|---|---|---|
| 7 | 0.10 | 0.13 | 2.3 | 0.18 | 0.005 | 0.06 | 0.20 | 0.26 |
| 8 | 0.05 | 0.16 | 2.0 | 0.15 | 0.001 | | 1.90 | 1.90 |
| 9 | 0.11 | 0.16 | 2.0 | 0.16 | 0.020 | | 2.00 | 2.00 |
| 10 | 0.05 | 0.15 | 2.0 | 0.15 | 0.020 | | 0.05 | 0.05 |
| 11 | 0.10 | 0.15 | 1.8 | 0.18 | 0.010 | 0.15 | | 0.15 |
| 12 | 0.08 | 0.22 | 2.1 | 0.18 | 0.020 | 0.10 | | 0.10 |
| 13 | 0.10 | 0.13 | 1.8 | 0.15 | 0.002 | 0.30 | | 0.30 |
| 14 | 0.05 | 0.16 | 1.5 | 0.18 | 0.001 | 1.20 | | 1.20 |
| 15 | 0.06 | 0.13 | 2.0 | 0.22 | 0.001 | 0.05 | 2.30 | 2.35 |
| 16 | 0.07 | 0.21 | 2.1 | 0.18 | 0.020 | | 0.50 | 0.50 |
| 17 | 0.08 | 0.15 | 2.0 | 0.18 | 0.001 | 0.20 | 1.50 | 1.70 |
| 18 | 0.03 | 0.17 | 1.5 | 0.18 | 0.020 | 0.05 | | 0.05 |
| 19 | 0.14 | 0.20 | 2.2 | 0.19 | 0.002 | 0.20 | 0.10 | 0.30 |
| 20 | 0.12 | 0.13 | 2.1 | 0.20 | 0.005 | 0.06 | 3.20 | 3.26 |
| 21 | 0.08 | 0.13 | 1.4 | 0.20 | 0.005 | 0.06 | | 0.06 |
| 22 | 0.07 | 0.14 | 1.5 | 0.16 | 0.020 | | 0.05 | 0.05 |
| 23 | 0.08 | 0.13 | 1.5 | 0.16 | 0.001 | | | |
| 24 | 0.08 | 0.23 | 2.3 | 0.16 | 0.001 | | | |
| 25 | 0.08 | 0.32 | 1.8 | 0.17 | 0.001 | | | |
| 26 | 0.08 | 0.25 | 2.5 | 0.18 | 0.002 | | | |
| 27 | 0.11 | 0.18 | 2.2 | 0.12 | 0.002 | 0.50 | | 0.50 |

[Table 2B]

| No. | C | Si | Mn | Ti | Al | Cr | Ni | Cr + Ni |
|---|---|---|---|---|---|---|---|---|
| 28 | 0.08 | 0.16 | 2.0 | 0.21 | 0.020 | 0.12 | | 0.12 |
| 29 | 0.07 | 0.18 | 1.8 | 0.18 | 0.002 | | 0.15 | 0.15 |
| 30 | 0.05 | 0.13 | 1.8 | 0.14 | 0.002 | 0.05 | 0.02 | 0.07 |
| 31 | 0.07 | 0.19 | 2.0 | 0.23 | 0.020 | 0.07 | | 0.07 |
| 32 | 0.10 | 0.19 | 1.7 | 0.20 | 0.002 | 0.10 | 0.10 | 0.20 |
| 33 | 0.07 | 0.13 | 2.0 | 0.15 | 0.020 | 0.05 | | 0.05 |
| 34 | 0.07 | 0.14 | 1.8 | 0.19 | 0.002 | | | |
| 35 | 0.06 | 0.13 | 1.8 | 0.15 | 0.003 | | | |

[Table 3A]

| No. | P | S | N | B | Mo | Cu | Nb | V | Zr | Mg | As | Sn | Sb |
|---|---|---|---|---|---|---|---|---|---|---|---|---|---|
| 1 | 0.011 | 0.009 | 0.0032 | | | 0.31 | | | | | | | |
| 2 | 0.011 | 0.001 | 0.0032 | | | 0.29 | | | | | | | |
| 3 | 0.012 | 0.009 | 0.0033 | | | 0.28 | | 0.2 | | | | | |
| 4 | 0.014 | 0.011 | 0.0032 | | | 0.28 | | | | | | | |
| 5 | 0.011 | 0.008 | 0.0032 | 0.0041 | | 0.32 | | | | | | | |

(continued)

| No. | P | S | N | B | Mo | Cu | Nb | V | Zr | Mg | As | Sn | Sb |
|---|---|---|---|---|---|---|---|---|---|---|---|---|---|
| 6 | 0.014 | 0.011 | 0.0035 | | 0.1 | | | 0.1 | | | | | |
| 7 | 0.011 | 0.007 | 0.0045 | | | 0.21 | | | | | | | |
| 8 | 0.011 | 0.009 | 0.0042 | 0.0031 | | 0.31 | | | | | | | |
| 9 | 0.008 | 0.009 | 0.0031 | | | 0.48 | | | | | | | |
| 10 | 0.012 | 0.008 | 0.0033 | 0.0032 | | 0.32 | | | | | | | |
| 11 | 0.011 | 0.011 | 0.0051 | | 0.3 | 0.31 | | | | | | | |
| 12 | 0.012 | 0.007 | 0.0033 | | | 0.31 | 0.14 | 0.2 | | | | | |
| 13 | 0.011 | 0.008 | 0.0032 | | | 0.29 | | | | | | | |
| 14 | 0.014 | 0.008 | 0.0031 | | | 0.31 | | | | | | | |
| 15 | 0.008 | 0.009 | 0.0032 | | | 0.28 | | | | | | | |
| 16 | 0.007 | 0.008 | 0.0030 | | 0.3 | 0.27 | | | | | | | |
| 17 | 0.013 | 0.011 | 0.0035 | 0.0033 | | 0.025 | | | | | | | |
| 18 | 0.011 | 0.008 | 0.0032 | | | 0.31 | | | | | | | |
| 19 | 0.012 | 0.007 | 0.0033 | | | 0.31 | | | | | | | |
| 20 | 0.011 | 0.008 | 0.0033 | | | 0.32 | | | | | | | |
| 21 | 0.011 | 0.007 | 0.0031 | | | 0.31 | | | | | | | |
| 22 | 0.012 | 0.008 | 0.0032 | | | 0.29 | | | | | | | |
| 23 | 0.011 | 0.008 | 0.0031 | | | 0.29 | | | | | | | |
| 24 | 0.013 | 0.009 | 0.0033 | | | 0.32 | | | | | | | |
| 25 | 0.012 | 0.007 | 0.0032 | | | 0.31 | | | | | | | |
| 26 | 0.011 | 0.008 | 0.0033 | | | 0.33 | | | | | | | |
| 27 | 0.014 | 0.007 | 0.0032 | | | 0.31 | | | | | | | |

[Table 3B]

| No. | P | S | N | B | Mo | Cu | Nb | V | Zr | Mg | As | Sn | Sb |
|---|---|---|---|---|---|---|---|---|---|---|---|---|---|
| 28 | 0.012 | 0.008 | 0.0048 | 0.0041 | | 0.29 | | | 0.11 | | | | 0.07 |
| 29 | 0.008 | 0.003 | 0.0031 | 0.0032 | | 0.32 | | | | 0.004 | | 0.004 | |
| 30 | 0.011 | 0.008 | 0.0034 | | | 0.33 | | | 0.18 | | 0.04 | | |
| 31 | 0.013 | 0.004 | 0.0057 | 0.0042 | 0.2 | 0.46 | | | | | | | 0.05 |
| 32 | 0.014 | 0.014 | 0.0041 | 0.0047 | | 0.37 | | | | | | | |
| 33 | 0.011 | 0.002 | 0.0032 | 0.0034 | | 0.33 | | | 0.05 | | | | |
| 34 | 0.011 | 0.008 | 0.0035 | 0.0033 | | 0.31 | | | | | | | |
| 35 | 0.008 | 0.008 | 0.0031 | 0.0033 | | 0.34 | | | | | | | |

[Table 4A]

| | Formula (4) | Formula (1) | Formula (2) | Formula (3) | Formula (6) |
|---|---|---|---|---|---|
| No. | Ceq | Si × Mn | (Si + Mn/5)/(Ti + Al) | Si + 0.5 × (Mn + Cr) + 0.3 × Ni | C × (5 × Si + Mn) |
| 1 | 0.43 | 0.32 | 3.1 | 1.22 | 0.20 |
| 2 | 0.38 | 0.34 | 3.4 | 1.12 | 0.17 |
| 3 | 0.33 | 0.42 | 3.6 | 1.05 | 0.20 |

(continued)

| No. | Formula (4) Ceq | Formula (1) Si × Mn | Formula (2) (Si + Mn/5)/(Ti + Al) | Formula (3) Si + 0.5 × (Mn + Cr) + 0.3 × Ni | Formula (6) C × (5 × Si + Mn) |
|---|---|---|---|---|---|
| 4 | 0.45 | 0.29 | 3.1 | 1.22 | 0.21 |
| 5 | 0.49 | 0.40 | 2.5 | 1.39 | 0.21 |
| 6 | 0.38 | 0.32 | 3.4 | 1.03 | 0.18 |
| 7 | 0.51 | 0.30 | 3.2 | 1.37 | 0.30 |
| 8 | 0.44 | 0.32 | 3.7 | 1.73 | 0.14 |
| 9 | 0.50 | 0.32 | 3.1 | 1.76 | 0.31 |
| 10 | 0.39 | 0.30 | 3.2 | 1.17 | 0.14 |
| 11 | 0.51 | 0.27 | 2.7 | 1.13 | 0.26 |
| 12 | 0.46 | 0.46 | 3.2 | 1.32 | 0.26 |
| 13 | 0.47 | 0.23 | 3.2 | 1.18 | 0.25 |
| 14 | 0.55 | 0.24 | 2.5 | 1.51 | 0.12 |
| 15 | 0.47 | 0.26 | 2.4 | 1.85 | 0.16 |
| 16 | 0.52 | 0.44 | 3.2 | 1.41 | 0.22 |
| 17 | 0.50 | 0.30 | 3.0 | 1.70 | 0.22 |
| 18 | 0.30 | 0.26 | 2.4 | 0.95 | 0.07 |
| 19 | 0.56 | 0.44 | 3.4 | 1.43 | 0.45 |
| 20 | 0.57 | 0.27 | 2.7 | 2.17 | 0.33 |
| 21 | 0.33 | 0.18 | 2.0 | 0.86 | 0.16 |
| 22 | 0.33 | 0.21 | 2.4 | 0.91 | 0.15 |
| 23 | 0.34 | 0.20 | 2.7 | 0.88 | 0.17 |
| 24 | 0.47 | 0.53 | 4.3 | 1.38 | 0.28 |
| 25 | 0.39 | 0.58 | 4.0 | 1.22 | 0.27 |
| 26 | 0.51 | 0.63 | 4.2 | 1.50 | 0.30 |
| 27 | 0.58 | 0.40 | 5.1 | 1.53 | 0.34 |

[Table 4B]

| No. | Formula (4) Ceq | Formula (1) Si × Mn | Formula (2) (Si + Mn/5)/(Ti + Al) | Formula (3) Si + 0.5 × (Mn + Cr) + 0.3 × Ni | Formula (6) C × (5 × Si + Mn) |
|---|---|---|---|---|---|
| 28 | 0.44 | 0.32 | 2.4 | 1.22 | 0.22 |
| 29 | 0.38 | 0.32 | 3.0 | 1.13 | 0.19 |
| 30 | 0.37 | 0.23 | 3.5 | 1.06 | 0.12 |
| 31 | 0.48 | 0.38 | 2.4 | 1.23 | 0.21 |
| 32 | 0.41 | 0.32 | 2.6 | 1.12 | 0.27 |
| 33 | 0.42 | 0.26 | 3.1 | 1.16 | 0.19 |
| 34 | 0.38 | 0.25 | 2.6 | 1.04 | 0.18 |
| 35 | 0.37 | 0.23 | 3.2 | 1.03 | 0.15 |

Using the experimentally produced solid wire, lap fillet welding was performed between hot rolled 440 MPa-class steel sheets (sheet thickness: 2.9 mm) to investigate the sheet separation weldability, the spatter adhesion amount to the steel sheets, and electrodeposition coating defects. In each example, the lap fillet welding was pulse MAG welding using Ar + 20% $CO_2$ as a shielding gas.

(Investigation of sheet separation weldability)

A taper test was performed using a sheet separation test piece whose separation between the steel sheets 2 gradually expands as illustrated in FIG. 4. Lap fillet welding was performed in a state where two test pieces each having a length of 300 mm were stacked with each other and sandwiching a spacer having a thickness of 3 mm on one end. The welding current was 260 A, the arc voltage was 28.5 V, and the welding speed was 100 cm/min. Welding was performed, the position having a sheet separation of 0 mm being the starting position. After the welding was finished, it was determined that the range where the upper sheet corner was melted as illustrated in FIG. 3A was good, and the range where the upper sheet corner was not melted as illustrated in FIG. 3B was poor, and the upper limit of the sheet separation that can be welded was determined and listed in the column of "Taper test result" in Tables 5A and 5B. The sheet separation weldability was determined as pass or fail based on the half of the sheet thickness of the steel sheet. That is, when the upper limit of the sheet separation was 1.50 mm or more, the sheet separation weldability was regarded as pass.

(Investigation of spatter adhesion amount)

Bead-on-plate welding with a welding length of 120 mm was performed on a test piece with a steel sheet size of 150 mm $\times$ 50 mm, and the number of spatters with a size of 0.3 mm or more attached to the surface of the steel sheet was counted. The welding current was 200 A, the arc voltage was 23.5 V, and the welding speed was 100 cm/min. The number of spatters was evaluated such that 4 or less was Very Good, 5 to 7 was Good, and 8 or more was Normal (a large number of spatters) for relative comparison, and the evaluation results are described in the "Spatter adhesion amount" column in Tables 5A and 5B.

(Measurement of area proportion of electrodeposition coating defect)

The weld test piece prepared in a downward posture was subjected to degreasing and chemical conversion treatment and then subjected to electrodeposition coating so that the film thickness was 20 $\mu$m. As the manufacturing conditions of the weld test piece, the welding current was 200 A, the arc voltage was 23.5 V, and the welding speed was 100 cm/min. Then, the electrodeposition coating portion of the weld bead was photographed, and the area proportion of electrodeposition coating defect with respect to the weld bead area was measured from the image. The bead length of the weld test piece was 120 mm. Then, the percent defective of electrodeposition coating was determined for the weld bead having a length of 90 mm excluding 15 mm at the weld start portion and the end portion. The electrodeposition coating was performed using a gray coating material. As a result, the electrodeposition coating defective portion where the red-brown or black slag is exposed and the coated portion can be easily distinguished. When the coating defective area was 5% or less in terms of area proportion, it was determined that the electrodeposition coating rate was good, which is described as "GOOD" in the "Coating defective area proportion" column in Tables 5A and 5B. When there is a coating defect, the coating defective area proportion was described in the "Coating defective area proportion" column in Tables 5A and 5B.

Tables 5A and 5B also show the productivity of the solid wire. The productivity was evaluated by the presence or absence of breakage of the wire when the annealed wire material is subjected to finish drawing from $\varphi$5.0 mm to $\varphi$1.2 mm, and the presence or absence of breakage is described in the "Presence or absence of breakage" column in Tables 5A and 5B. In the annealing, the temperature history was managed so that the wire material was heated to 1200°C and then the cooling time was 300 seconds from 800°C to 500°C. As shown in Tables 5A and 5B, the solid wire components according to the present disclosure secured stable productivity without breakage during wire drawing. On the other hand, breakage occurred in Comparative Examples 19, 20, and 27. In any of the examples, it is presumed that the hardness of the wire material due to excessively large Ceq causes the breakage.

[Table 5A]

| No. | Presence or absence of breakage | Taper test result (mm) | Spatter adhesion amount | Coating defective area proportion |
|-----|--------------------------------|------------------------|-------------------------|-----------------------------------|
| 1 | Absent | 1.55 | VERY GOOD | GOOD |
| 2 | Absent | 1.57 | VERY GOOD | GOOD |
| 3 | Absent | 1.53 | VERY GOOD | GOOD |
| 4 | Absent | 1.62 | VERY GOOD | GOOD |

(continued)

| No. | Presence or absence of breakage | Taper test result (mm) | Spatter adhesion amount | Coating defective area proportion |
|---|---|---|---|---|
| 5 | Absent | 1.67 | VERY GOOD | GOOD |
| 6 | Absent | 1.54 | VERY GOOD | GOOD |
| 7 | Absent | 1.66 | VERY GOOD | GOOD |
| 8 | Absent | 1.82 | GOOD | GOOD |
| 9 | Absent | 1.84 | VERY GOOD | GOOD |
| 10 | Absent | 1.57 | GOOD | GOOD |
| 11 | Absent | 1.54 | VERY GOOD | GOOD |
| 12 | Absent | 1.68 | VERY GOOD | GOOD |
| 13 | Absent | 1.58 | VERY GOOD | GOOD |
| 14 | Absent | 1.73 | GOOD | GOOD |
| 15 | Absent | 1.74 | VERY GOOD | GOOD |
| 16 | Absent | 1.65 | VERY GOOD | GOOD |
| 17 | Absent | 1.78 | VERY GOOD | GOOD |
| 18 | Absent | 1.43 | NORMAL | GOOD |
| 19 | Present | 1.72 | VERY GOOD | GOOD |
| 20 | Present | 1.81 | GOOD | GOOD |
| 21 | Absent | 1.38 | VERY GOOD | GOOD |
| 22 | Absent | 1.41 | GOOD | GOOD |
| 23 | Absent | 1.43 | GOOD | GOOD |
| 24 | Absent | 1.65 | VERY GOOD | 13% |
| 25 | Absent | 1.57 | VERY GOOD | 13% |
| 26 | Absent | 1.71 | VERY GOOD | 16% |
| 27 | Present | 1.68 | VERY GOOD | 17% |

[Table 5B]

| No. | Presence or absence of breakage | Taper test result (mm) | Spatter adhesion amount | Coating defective area proportion |
|---|---|---|---|---|
| 28 | Absent | 1.71 | VERY GOOD | GOOD |
| 29 | Absent | 1.58 | VERY GOOD | GOOD |
| 30 | Absent | 1.55 | NORMAL | GOOD |
| 31 | Absent | 1.68 | VERY GOOD | GOOD |
| 32 | Absent | 1.62 | VERY GOOD | GOOD |
| 33 | Absent | 1.61 | NORMAL | GOOD |
| 34 | Absent | 1.58 | GOOD | GOOD |
| 35 | Absent | 1.55 | NORMAL | GOOD |

In Example 18, the C content was inappropriate, and the formula (3), which is an index of sheet separation weldability, was not satisfied. Example 18 failed with regard to sheet separation weldability.

In Example 19, the C content was inappropriate, and the formula (4), which is an index of productivity, was not satisfied. The wire of Example 19 was broken down during the manufacturing process.

In Example 20, the total content of Cr and Ni was inappropriate, and the formula (4), which is an index of productivity, was not satisfied. The wire of Example 20 was broken down during the manufacturing process.

In Examples 21, 22, and 23, the formula (3), which is an index of sheet separation weldability, was not satisfied. Examples 21, 22, and 23 failed with regard to sheet separation weldability.

In Example 24, the formula (2), which is an index of coatability, was not satisfied. Example 24 failed with regard to electrodeposition coating properties.

In Example 25, the Si content was inappropriate. Example 25 failed with regard to electrodeposition coating properties.

In Example 26, the Mn content was inappropriate, and the formulae (1) and (2), which are indexes of coatability, were not satisfied. Example 26 failed with regard to electrodeposition coating properties.

In Example 27, the Ti content was inappropriate, and the formula (2), which is an index of coatability, and the formula (4), which is an index of productivity, were not satisfied. The wire of Example 27 was broken down during the manufacturing process. Example 27 failed with regard to electrodeposition coating properties.

On the other hand, in the examples in which the chemical components were appropriate and the formulae (1) to (4) were satisfied, all of the productivity, the sheet separation weldability, and the coatability were good. In the example satisfying the formula (6), which is an index of spatter generation amount, the spatter adhesion amount was suppressed to an extremely low level.

(Experiment 2)

Various solid wires were manufactured by a manufacturing method including: primarily drawing a wire rod to obtain a primary drawn wire; annealing the primary drawn wire; and secondarily drawing the primary drawn wire to obtain a solid wire. During the annealing of the primary drawn wire, the dew point of the annealing atmosphere was within a range of -10 to +10°C. The components of the solid wire, the annealing temperature, the annealing time, and the area proportion of the secondary drawn wire with respect to the primary drawn wire were as shown in Table 6.

Then, for these solid wires, H1 (Vickers hardness measured at a depth of 0.05 mm from the surface of the solid wire) and H2 (average value of Vickers hardness measured at a depth of 0.25 mm and at a depth of 0.35 mm from the surface) were measured. H2 and H2 - H1 are listed in Table 6.

Further, a welding test using these solid wires was performed to investigate the spatter adhesion amount. The measurement method of the spatter adhesion amount was the same as that in Experiment 1.

[Table 6]

| No. | Component | Annealing temperature (°C) | Annealing time (min) | Product of annealing temperature and annealing time (°C·min) | Area proportion | Size of solid wire (mm) | H2 (HV0.3) | H2-H1 (HV0.3) | Number of spatter adhesion | Determination |
|---|---|---|---|---|---|---|---|---|---|---|
| B1 | Table 2A No.4 | 850 | 10 | 8500 | 23% | 1.2 | 304 | 52 | 0 | Extremely small |
| B2 | Table 2A No.4 | 900 | 30 | 27000 | 15% | 1.2 | 231 | 82 | 5 | Normal |
| B3 | Table 2A No.8 | 650 | 10 | 6500 | 23% | 1.2 | 343 | 8 | 6 | Normal |
| B4 | Table 2A No.8 | 850 | 15 | 12750 | 23% | 1.2 | 278 | 62 | 2 | Extremely small |
| B5 | Table 2A No.8 | 800 | 30 | 24000 | 28% | 1.4 | 258 | 103 | 2 | Extremely small |
| B6 | Table 2B No.30 | 850 | 20 | 17000 | 14% | 0.8 | 288 | 59 | 0 | Extremely small |
| B7 | Table 2B No.30 | 850 | 20 | 17000 | 8% | 0.8 | 337 | 32 | 5 | Normal |
| B8 | Table 2B No.31 | 850 | 20 | 17000 | 15% | 1.2 | 254 | 71 | 1 | Extremely small |
| B9 | Table 2B No.23 | 900 | 10 | 9000 | 15% | 1.2 | 294 | 47 | 1 | Extremely small |
| B10 | Table 2B No.34 | 800 | 20 | 16000 | 23% | 1.2 | 288 | 61 | 0 | Extremely small |
| B11 | Table 2B No.35 | 900 | 10 | 9000 | 16% | 0.9 | 312 | 55 | 0 | Extremely small |
| The "Area proportion" is the area proportion of the secondary drawn wire with respect to the primary drawn wire. | | | | | | | | | | |

In Example B2, the product of the annealing temperature and the annealing time was large. As a result, H2 of Example B2 was reduced. In the welding test of Example B2, the spatter adhesion amount was at the same level as that of the conventional solid wire.

In Example B3, the product of the annealing temperature and the annealing time was small. As a result, H2 - H1 of Example B3 was reduced. In the welding test of Example B3, the spatter adhesion amount was at the same level as that of the conventional solid wire.

In Example B7, the area proportion of the secondary drawn wire with respect to the primary drawn wire was small, so that H2 - H1 in Example B7 was small. In the welding test of Example B7, the spatter adhesion amount was at the same level as that of the conventional solid wire.

On the other hand, in the welding test of the solid wire in which H2 and H2 - H1 were appropriate, the spatter adhesion amount was significantly improved as compared with the conventional solid wire.

REFERENCE SIGNS LIST

1 Weld metal
2 Steel sheet
3 Spacer
4 Solid wire
5 Droplet
S Sheet separation
A Undercut

**Claims**

1.  A solid wire for gas-shielded arc welding comprising: in terms of mass% with respect to a total mass of the solid wire,

C: 0.04 to 0.12%,
Si: 0.13 to 0.28%,
Mn: 1.4 to 2.3%,
Ti: 0.13 to 0.25%,
Al: 0.001 to 0.050%,
Cr: 0 to 3.00%,
Ni: 0 to 3.00%,
P: 0.020% or less,
S: 0.015% or less,
N: 0.0060% or less,
Mo: 0 to 0.5%,
B: 0 to 0.0100%,
Cu: 0 to 0.50%,
Nb: 0 to 0.30%,
V: 0 to 0.5%,
Zr: 0 to 0.20%,
Mg: 0 to 0.050%,
As: 0 to 0.020%,
Sn: 0 to 0.100%,
Sb: 0 to 0.10%, and
a balance including iron and impurities,
wherein formulae (1), (2), (3), (4), and (5) below are satisfied:

$$\mathrm{Si} \times \mathrm{Mn} \leq 0.60... \text{ formula (1)}$$

$$(\mathrm{Si} + \mathrm{Mn}/5)/(\mathrm{Ti} + \mathrm{Al}) \leq 4.0... \text{ formula (2)}$$

$$1.00 \leq Si + 0.5 \times (Mn + Cr) + 0.3 \times Ni... \text{ formula (3)}$$

$$0.30 \leq C + Mn/6 + Si/24 + Ni/40 + Cr/5 + Mo/4 + V/14 \leq 0.55... \text{ formula (4)}$$

$$0 \leq Cr + Ni \leq 3.00... \text{ formula (5)}$$

here, in the formulae (1), (2), (3), (4), and (5), each element symbol is a content of each element, in terms of mass% with respect to the total mass of the solid wire.

2. The solid wire for gas-shielded arc welding according to claim 1, wherein

$$0.16 \leq C \times (5 \times Si + Mn) \leq 0.35... \text{ formula (6)}$$

is satisfied, in terms of mass% with respect to the total mass of the solid wire.

3. The solid wire for gas-shielded arc welding according to claim 1 or 2, comprising: in terms of mass% with respect to the total mass of the solid wire, one or more selected from

    Al: 0.010 to 0.050%,
    Cr: 0.10 to 1.50%,
    Ni: 0.10 to 3.00%, and
    B: 0.0030 to 0.0100%.

4. The solid wire for gas-shielded arc welding according to any one of claims 1 to 3, having a hardness satisfying formulae (7) and (8) below, the hardness being measured in a cross section of the solid wire:

$$H2 \geq 250... \text{ formula (7)}$$

$$H2 - H1 \geq 40... \text{ formula (8)}$$

here, in the formula (8), the symbol H1 is a Vickers hardness measured at a depth of 0.05 mm from a surface of the solid wire; and in the formulae (7) and (8), the symbol H2 is an average value of Vickers hardness measured at a depth of 0.25 mm and a depth of 0.35 mm from the surface.

5. The solid wire for gas-shielded arc welding according to any one of claims 1 to 4, comprising

    Si: 0.13 to 0.19%,
    in terms of mass% with respect to the total mass of the solid wire.

6. The solid wire for gas-shielded arc welding according to any one of claims 1 to 5, comprising

    Cr: 0.15 to 3.00%,
    in terms of mass% with respect to the total mass of the solid wire.

7. The solid wire for gas-shielded arc welding according to any one of claims 1 to 5, comprising

    Cr: 0% or more and less than 0.50%,
    in terms of mass% with respect to the total mass of the solid wire.

8. The solid wire for gas-shielded arc welding according to any one of claims 1 to 7, comprising

    Ni: 0 to 0.45%,
    in terms of mass% with respect to the total mass of the solid wire.

9. The solid wire for gas-shielded arc welding according to any one of claims 1 to 8, wherein

$$0.05 \leq Cr + Ni \leq 3.00... \text{ formula (9)}$$

is satisfied, in terms of mass% with respect to the total mass of the solid wire.

10. The solid wire for gas-shielded arc welding according to any one of claims 1 to 9, having a diameter of 0.8 to 1.4 mm.

11. A manufacturing method of a welded joint, the method comprising:
    gas-shielded arc welding a steel sheet, using the solid wire for gas-shielded arc welding according to any one of claims 1 to 10.

# FIG. 1

GOOD SHEET SEPARATION WELDABILITY

(Y-axis) UPPER LIMIT OF WELDING SHEET SEPARATION (mm)

(X-axis) Si+0.5×(Mn+Cr)+0.3×Ni (%)

# FIG. 2

REDUCED SPATTER

(Y-axis) NUMBER OF SPATTERS

(X-axis) C×(5×Si+Mn)

FIG. 3A

FIG. 3B

FIG. 4

FIG. 5A

FIG. 5B

FIG. 6

DISTANCE FROM SURFACE (mm)

## INTERNATIONAL SEARCH REPORT

International application No.

**PCT/JP2024/031293**

### A. CLASSIFICATION OF SUBJECT MATTER

***B23K 35/30***(2006.01)i; ***B23K 9/173***(2006.01)i
FI:    B23K35/30 320A; B23K9/173 A

According to International Patent Classification (IPC) or to both national classification and IPC

### B. FIELDS SEARCHED

Minimum documentation searched (classification system followed by classification symbols)

B23K35/30; B23K9/173

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2022/050014 A1 (KABUSHIKI KAISHA KOBE SEIKO SHO) 10 March 2022 (2022-03-10)<br>       paragraphs [0019]-[0036], [0046]-[0054], tables 1-3 | 1, 3, 5-11 |
| A | | 2, 4 |
| A | JP 2021-3732 A (NIPPON STEEL CORPORATION) 14 January 2021 (2021-01-14) | 1-11 |
| A | JP 2022-102850 A (NIPPON STEEL WELDING & ENGINEERING CO., LTD.) 07 July 2022 (2022-07-07) | 1-11 |
| P, X | JP 2024-68661 A (NIPPON STEEL CORPORATION) 20 May 2024 (2024-05-20)<br>       paragraphs [0038]-[0104], [0166]-[0177], tables 1-5 | 1-3, 5-11 |
| P, A | | 4 |

☐ Further documents are listed in the continuation of Box C.        ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **06 November 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/031293**

| Patent document cited in search report | | | Publication date (day/month/year) | Patent family member(s) | | | Publication date (day/month/year) |
|---|---|---|---|---|---|---|---|
| WO | 2022/050014 | A1 | 10 March 2022 | US 2023/0264304 A1 paragraphs [0055]-[0104], [0124]-[0150], tables 1-3 CN 115916446 A CA 3192605 A1 MX 2023002621 A JP 2022-42360 A | | | |
| JP | 2021-3732 | A | 14 January 2021 | (Family: none) | | | |
| JP | 2022-102850 | A | 07 July 2022 | (Family: none) | | | |
| JP | 2024-68661 | A | 20 May 2024 | (Family: none) | | | |

Form PCT/ISA/210 (patent family annex) (July 2022)

**EP 4 772 305 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023141138 A
- JP 2021045761 A
- JP 2019081195 A